# EUROPEAN PATENT APPLICATION

(11) **EP 4 822 606 A1**
(43) Date of publication of application: **14.10.2026**
(21) Application number: 25169257.0
(22) Date of filing: 08.04.2025
(51) Int. Cl.: G06N 5/025

(54) **RULE GENERATION SYSTEM**

(71) Applicant: ABB SCHWEIZ AG, 5400 Baden (CH)
(72) Inventor: GITZEL, Ralf, 68165 Mannheim (DE); BORRISON, Reuben, 68782 Brühl (DE); SONG, Chen, 68163 Mannheim (DE); BHATTACHARYA, Nilavra, 68167 Mannheim (DE); TAMASCELLI, Nicola, 68259 Mannheim (DE); KOZEL, Tomas, 635 00 Brno (CZ)
(74) Representative: Maiwald GmbH

(57) **Abstract**

The present invention relates to a rule generation system (200) for a low, medium or high voltage switchgear, comprising: a rule generator engine (210); an input unit (220); and an output unit (230);
wherein the input unit is configured to receive a query from an operator regarding an activity relating to a switchgear, wherein the activity comprises one or more of: operation of the switchgear, maintenance of the switchgear, rectification of one or more problems with the switchgear;
wherein the input unit is configured to provide the query to the rule generator engine;
wherein the rule generator engine is configured to provide at least one preliminary switchgear operation rule, wherein the provision of the at least one preliminary switchgear operation rule comprises utilization of the query, and wherein each preliminary switchgear operation rule comprises a tuple of one instrument type, one issue, and an action step or series of action steps taken to mitigate the issue;
wherein the output unit is configured to output the at least one preliminary switchgear operation rule;
wherein the input unit is configured to receive feedback on and/or an edit to a selected preliminary switchgear operation rule of the at least one preliminary switchgear operation rule, wherein the feedback on and/or the edit to the selected preliminary switchgear operation rule is provided by the operator or a second operator;
wherein the rule generator engine is configured to generate an updated preliminary switchgear operation rule, wherein the generation of the updated preliminary switchgear operation rule comprises utilization of the selected preliminary switchgear operation rule and the feedback on and/or the edit to the selected preliminary switchgear operation rule; and
wherein the output unit is configured to output and/or save at least one switchgear operation rule, wherein the at least one switchgear operation rule comprises the updated preliminary switchgear operation rule.

## Description

### FIELD OF THE INVENTION

The present invention relates to a rule generation system for a low, medium or high voltage switchgear, a rule generation method for a low, medium or high voltage switchgear, as well as a computer program element.

### BACKGROUND OF THE INVENTION

While the level of required knowledge for service personnel increases, a wave of new, young and inexperienced people arrive and need tools to support them. This applies to many technical fields, one example being (medium voltage) switchgears. Text and video can capture a lot of knowledge but are less helpful than a more interactive system.

Rules serve as a support tool for the service personnel that can guide them, based on the state of the machine (e.g., Switchgears) on what actions need to be performed to maintain a machine. This can be a series of instruction on a smartphone or something deployed on the machine to be serviced. Rules engines depend on a collection of facts presented as rules (e.g., using Ontologies). However, building the rules that are fit for purpose is not simple.

There is a need to address these issues.

### SUMMARY OF THE INVENTION

Therefore, it would be advantageous to have an improved support tool for service personnel working on low, medium and high voltage switchgear.

The object of the present invention is solved with the subject matter of the independent claims, wherein further embodiments are incorporated in the dependent claims.

In a first aspect, there is provided a rule generation system for a low, medium or high voltage switchgear, comprising:
- a rule generator engine;
- an input unit; and
- an output unit.

The input unit is configured to receive a query from an operator regarding an activity relating to a switchgear. The activity relating to the switchgear comprises one or more of: operation of the switchgear, maintenance of the switchgear, rectification of one or more problems with the switchgear.

The input unit is configured to provide the query to the rule generator engine.

The rule generator engine is configured to provide at least one preliminary switchgear operation rule. The provision of the at least one preliminary switchgear operation rule comprises utilization of the query. Each preliminary switchgear operation rule comprises a tuple of one instrument type, one issue, and an action step or series of action steps taken to mitigate the issue.

The output unit is configured to output the at least one preliminary switchgear operation rule.

The input unit is configured to receive feedback on and/or an edit to a selected preliminary switchgear operation rule of the at least one preliminary switchgear operation rule. The feedback on and/or the edit to the selected preliminary switchgear operation rule is provided by the operator or a second operator.

The rule generator engine is configured to generate an updated preliminary switchgear operation rule. The generation of the updated preliminary switchgear operation rule comprises utilization of the selected preliminary switchgear operation rule and the feedback on and/or the edit to the selected preliminary switchgear operation rule.

The output unit is configured to output and/or save at least one switchgear operation rule. The at least one switchgear operation rule comprises the updated preliminary switchgear operation rule.

The input unit can be a single input interface or multiple different input interfaces that perform the functions as described.

The rule generator engine can be one or more processors that perform the functions as described.

The output unit can be a single output interface or multiple different output interfaces that perform the functions as described.

The operator can be a technician who is going to work on a switchgear or a person such as an expert who is validating or updating rules that are to be used by a technician who is going to work on a switchgear.

The second operator can be a technician who is going to work on a switchgear or a person such as an expert who is validating or updating rules that are to be used by a technician who is going to work on a switchgear.

Thus, rules used to aid an operator or technician work on a switchgear can be updated based on edits/feedback by the operator or technician themselves and/or could be updated based on edits/feedback by an expert in order that a rule used to work on the switchgear is most appropriated for that work and for subsequent use by different operators/technicians faced with the same problem or issue.

In this manner, human feedback is provided to fine tune the rules, thereby in effect validating rules that are finally provided more fit for purpose.

In an example, the generation of the updated preliminary switchgear operation rule comprises utilization of a large language model (LLM) to process the selected preliminary switchgear operation rule and the feedback on and/or the edit to the selected preliminary switchgear operation rule.

Thus, a new technique is provided that makes use of a Large Language Model (LLM) such as ChatGPT to determine updated or optimized switchgear operation rules that can then be used, to support service personnel to guide them when working on a switchgear.

In an example, the generation of the updated preliminary switchgear operation rule comprises one or more of: add one or more new action steps to the action step or action steps of the preliminary switchgear operation rule, change an order of action steps of the preliminary switchgear operation rule, edit one or more action steps of the preliminary switchgear operation rule, highlight one or more action steps of the preliminary switchgear operation rule, add one or more action steps to the preliminary switchgear operation rule.

That the system can highlight one or more action steps of the preliminary switchgear operation rule means that the system can indicate that more detail is required to be added to the one or more action steps.

In an example, the provision of the at least one preliminary switchgear operation rule comprises utilization of the query to select the at least one preliminary switchgear operation rule from a knowledge base, wherein the knowledge base comprises a plurality of switchgear operation rules.

In an example, the provision of the at least one preliminary switchgear operation rule comprises utilization of the query by a LLM to process a plurality of service reports from the knowledge base to generate the at least one preliminary switchgear operation rule, wherein each service report comprises natural language.

The LLM that generates the at least one preliminary switchgear operation rule can be the same LLM that generated the updated preliminary switchgear operation rule or can be a different LLM.

The knowledge base can be one or more databases, computational storage media, and can include storage media of the rule generation system itself and/or the rule generation system can interrogate storage media external to the rule generation system as part of the retrieval of the information.

Thus, a Large Language Model (LLM) such as ChatGPT is used to generate rules in the first instance and this LLM or a different LM is used to determine updated or optimized switchgear operation rules that can then be used, to support service personnel to guide them when working on a switchgear, wherein domain specific knowledge is utilized to augment the process of generating the rules.

The new development, where relevant information from a knowledge base is utilized in the generation/extraction of rules, mitigates problems that could be caused by a LLM lacking domain specific and/or product specific knowledge.

In an example, the rule generator engine is configured to utilize the LLM to identify entries from the natural language in the plurality of service reports- The identified entries comprise names and types of instruments, issues that need to be addressed for those instruments, and actions taken by service technicians to mitigate the issues. The rule generator engine is configured to utilize the query and the identified entries to form the at least one preliminary operation rule.

In an example, the plurality of service reports comprise natural language in a plurality of different languages, the plurality of different languages comprising two or more of English, German, French, Italian, Spanish, French, Portuguese, Japanese, Chinese.

In an example, the query comprises natural language.

In an example, the query comprises computational code.

In an example, the at least one preliminary switchgear operation rule comprises computational code and/or the at least one switchgear operation rule comprises computational code.

In an example, the at least one preliminary switchgear operation rule comprises natural language and/or the at least one switchgear operation rule comprises natural language. In an example, the feedback on and/or the edit to the selected preliminary switchgear operation rule comprises computational code.

In an example, the feedback on and/or the edit to the selected preliminary switchgear operation rule comprises natural language.

In an example, the at least one preliminary switchgear operation rule comprises a plurality of preliminary switchgear operation rules. The rule generator engine is configured to determine a relevance score for each preliminary switchgear rule comprising utilization of the query. The output unit is configured to output the plurality of preliminary of switchgear operation rules in a list ordered based on the relevance score for each preliminary switchgear operation rule.

Thus, the operator or technician or expert is presented with a series of possible rules that are considered to be most suitable for the task at hand. In this way, the operator or technician or expert can identify the most suitable rule or indeed identify a rule that is no appropriate. This ensures that for a set task that needs to be done, operators can input queries in quite different ways, but the system based on the edits/feedback will be able to present the finalized most appropriate rules irrespective of how an operative has formulated the job they are to do in an input query.

In an example, the feedback on and/or the edit to the selected preliminary switchgear operation rule comprises an indication that the selected preliminary switchgear operation rule should be placed higher in the list and the rule generator engine is configured to update the relevance score for the selected preliminary switchgear rule to a higher relevance score.

In an example, the feedback on and/or the edit to the selected preliminary switchgear operation rule comprises an indication that the selected preliminary switchgear operation rule should be placed lower in the list and the rule generator engine is configured to update the relevance score for the selected preliminary switchgear rule to a lower relevance score.

In an example, the generation of the updated preliminary switchgear operation rule comprises assigning a relevance score for the updated preliminary switchgear operation rule based on the updated relevance score for the selected preliminary switchgear operation rule.

In an example, the at least one switchgear operation rule comprises a plurality of switchgear operation rules that comprise the updated preliminary switchgear operation rule and the plurality of preliminary switchgear operation rules other than the selected preliminary switchgear operation rule. The output unit is configured to output and/or save the plurality of switchgear operation rules in a list ordered based on the relevance score for each switchgear operation rule.

Thus, the operator or technician or expert could utilize a simple "yes" or "no" push button implicit form of feedback, pushing a yes button on a screen to indicate for example that a rule that is presented constitutes a solution that often represents a fix to the problem or issue or pushing a no button on a screen to indicate for example that a rule that is presented constitutes a less likely solution to fix to the problem.

In an example, the feedback on and/or the edit to the selected preliminary switchgear operation rule comprises an edit and/or feedback on one or more specific issues relating to the selected preliminary switchgear operation rule provided in textual form. The edit and/or feedback on one or more specific issues relating to the selected preliminary switchgear operation rule provided in textual form comprises one or more of: an indication of a part of the selected preliminary switchgear operation rule that might not work or is not appropriate, an indication of a part of the selected preliminary switchgear operation rule that is unclear, a rewording of a part of the selected preliminary switchgear operation rule, an indication of an alternative step or action to a step or action of the selected preliminary switchgear operation rule, an indication of an additional step or action to a step or action of the selected preliminary switchgear operation rule.

In an example, the generation of the updated preliminary switchgear operation rule comprises utilization of the LLM to process the edit and/or feedback in textual form to generate the one or more of: add one or more new action steps to the action step or action steps of the preliminary switchgear operation rule, change an order of action steps of the preliminary switchgear operation rule, edit one or more action steps of the preliminary switchgear operation rule, highlight one or more action steps of the preliminary switchgear operation rule, add one or more action steps to the preliminary switchgear operation rule.

Thus, more detailed or structured explicit edits and/or feedback is provided by the operator, technician or expert to enable a rule to be most appropriately updated in order that it is fit for purpose for use by the operator or indeed any other operator or technician when faced with the same issue or problem.

Furthermore, the system enables steps of a rule to be highlighted, to indicate steps that appear to be weak, or wrong, or inappropriate, thereby enabling a technician using the rule to take particular care when referring to this action step of the rule, and also enables an expert to thoroughly review the rule to further edit the rule to correct any error or discrepancy or to validate the rule as being correct.

In an example, the system is configured to provide the edit and/or feedback in textual form to the rule generator engine as an XML or JSON file.

In a second aspect, there is provided a rule generation method for a low, medium or high voltage switchgear, comprising:
- receiving, by an input unit, a query from an operator regarding an activity relating to a switchgear, wherein the activity comprises one or more of operation of the switchgear, maintenance of the switchgear, rectification of one or more problems with the switchgear;
- providing, by the input unit, the query to a rule generator engine;
- providing, by the rule generator engine, at least one preliminary switchgear operation rule, wherein the providing the at least one preliminary switchgear operation rule comprises utilizing the query, and wherein each preliminary switchgear operation rule comprises a tuple of one instrument type, one issue, and an action step or series of action steps taken to mitigate the issue;
- outputting, by an output unit, at least one preliminary switchgear operation rule;
- receiving, by the input unit, feedback on and/or an edit to a selected preliminary switchgear operation rule of the at least one preliminary switchgear operation rule, wherein the feedback on and/or the edit to the selected preliminary switchgear operation rule is provided by the operator or a second operator;
- generating, by the rule generator engine, an updated preliminary switchgear operation rule, wherein the generating the updated preliminary switchgear operation rule comprises utilizing the selected preliminary switchgear operation rule and the feedback on and/or the edit to the selected preliminary switchgear operation rule; and
- outputting and/or saving, by output unit, at least one switchgear operation rule, wherein the at least one switchgear operation rule comprises the updated preliminary switchgear operation rule.

The input unit can be a single input interface or multiple different input interfaces that perform the functions as described.

The rule generator engine can be one or more processors that perform the functions as described.

The output unit can be a single output interface or multiple different output interfaces that perform the functions as described.

The operator can be a technician who is going to work on a switchgear or a person such as an expert who is validating or updating rules that are to be used by a technician who is going to work on a switchgear.

The second operator can be a technician who is going to work on a switchgear or a person such as an expert who is validating or updating rules that are to be used by a technician who is going to work on a switchgear.

Thus, rules used to aid an operator or technician work on a switchgear can be updated based on edits/feedback by the operator or technician themselves and/or could be updated based on edits/feedback by an expert in order that a rule used to work on the switchgear is most appropriated for that work and for subsequent use by different operators/technicians faced with the same problem or issue.

In this manner, human feedback is provided to fine tune the rules, thereby in effect validating rules that are finally provided more fit for purpose.

In an example, the generating the updated preliminary switchgear operation rule comprises utilizing a large language model (LLM) to process the selected preliminary switchgear operation rule and the feedback on and/or the edit to the selected preliminary switchgear operation rule.

Thus, a new technique is provided that makes use of a Large Language Model (LLM) such as ChatGPT to determine updated or optimized switchgear operation rules that can then be used, to support service personnel to guide them when working on a switchgear.

In an example, the generating the updated preliminary switchgear operation rule comprises one or more of: adding one or more new action steps to the action step or action steps of the preliminary switchgear operation rule, changing an order of action steps of the preliminary switchgear operation rule, editing one or action steps of the preliminary switchgear operation rule, highlighting one or more action steps of the preliminary switchgear operation rule, add one or more action steps to the preliminary switchgear operation rule.

That the system can highlight one or more action steps of the preliminary switchgear operation rule means that the system can indicate that more detail is required to be added to the one or more action steps.

In an example, the providing the at least one preliminary switchgear operation rule comprises utilizing the query to select the at least one preliminary switchgear operation rule from a knowledge base, wherein the knowledge base comprises a plurality of switchgear operation rules.

In an example, the providing the at least one preliminary switchgear operation rule comprises utilizing the query by a LLM to process a plurality of service reports from the knowledge base to generate the at least one preliminary switchgear operation rule, wherein each service report comprises natural language.

The LLM that generates the at least one preliminary switchgear operation rule can be the same LLM that generated the updated preliminary switchgear operation rule or can be a different LLM.

The knowledge base can be one or more databases, computational storage media, and can include storage media of the rule generation system itself and/or the rule generation system can interrogate storage media external to the rule generation system as part of the retrieval of the information.

Thus, a Large Language Model (LLM) such as ChatGPT is used to generate rules in the first instance and this LLM or a different LM is used to determine updated or optimized switchgear operation rules that can then be used, to support service personnel to guide them when working on a switchgear, wherein domain specific knowledge is utilized to augment the process of generating the rules.

The new development, where relevant information from a knowledge base is utilized in the generation/extraction of rules, mitigates problems that could be caused by a LLM lacking domain specific and/or product specific knowledge.

In an example, the method comprises utilizing, by the rule generator engine, the LLM to identify entries from the natural language in the plurality of service reports, wherein the identified entries comprise names and types of instruments, issues that need to be addressed for those instruments, and actions taken by service technicians to mitigate the issues; and utilizing, by the rule generator engine, the query and the identified entries to form the at least one preliminary operation rule.

In an example, the plurality of service reports comprise natural language in a plurality of different languages, the plurality of different languages comprising two or more of English, German, French, Italian, Spanish, French, Portuguese, Japanese, Chinese.

In an example, the query comprises natural language.

In an example, the query comprises computational code.

In an example, the at least one preliminary switchgear operation rule comprises computational code and/or the at least one switchgear operation rule comprises computational code.

In an example, the at least one preliminary switchgear operation rule comprises natural language and/or the at least one switchgear operation rule comprises natural language.

In an example, the feedback on and/or the edit to the selected preliminary switchgear operation rule comprises computational code.

In an example, the feedback on and/or the edit to the selected preliminary switchgear operation rule comprises natural language.

In an example, the at least one preliminary switchgear operation rule comprises a plurality of preliminary switchgear operation rules, and wherein the method comprises determining, by rule generator engine, a relevance score for each preliminary switchgear rule comprising utilizing the query, and outputting, by the output unit, the plurality of preliminary of switchgear operation rules in a list ordered based on the relevance score for each preliminary switchgear operation rule.

Thus, the operator or technician or expert is presented with a series of possible rules that are considered to be most suitable for the task at hand. In this way, the operator or technician or expert can identify the most suitable rule or indeed identify a rule that is no appropriate. This ensures that for a set task that needs to be done, operators can input queries in quite different ways, but the system based on the edits/feedback will be able to present the finalized most appropriate rules irrespective of how an operative has formulated the job they are to do in an input query.

In an example, the feedback on and/or the edit to the selected preliminary switchgear operation rule comprises an indication that the selected preliminary switchgear operation rule should be placed higher in the list or an indication that the selected preliminary switchgear operation rule should be placed lower in the list. The method can then comprise updating, by the rule generator engine, the relevance score for the selected preliminary switchgear rule to a higher relevance score or updating, by the rule generator engine, the relevance score for the selected preliminary switchgear rule to a lower relevance score. The generating the updated preliminary switchgear operation rule comprises assigning a relevance score for the updated preliminary switchgear operation rule based on the updated relevance score for the selected preliminary switchgear operation rule. The at least one switchgear operation rule comprises a plurality of switchgear operation rules that comprise the updated preliminary switchgear operation rule and the plurality of preliminary switchgear operation rules other than the selected preliminary switchgear operation rule. The method can then further comprise outputting and/or saving, by the output unit, the plurality of switchgear operation rules in a list ordered based on the relevance score for each switchgear operation rule.

Thus, the operator or technician or expert could utilize a simple "yes" or "no" push button implicit form of feedback, pushing a yes button on a screen to indicate for example that a rule that is presented constitutes a solution that often represents a fix to the problem or issue or pushing a no button on a screen to indicate for example that a rule that is presented constitutes a less likely solution to fix to the problem

In an example, the feedback on and/or the edit to the selected preliminary switchgear operation rule comprises an edit and/or feedback on one or more specific issues relating to the selected preliminary switchgear operation rule provided in textual form. The edit and/or feedback on one or more specific issues relating to the selected preliminary switchgear operation rule provided in textual form comprises one or more of: an indication of a part of the selected preliminary switchgear operation rule that might not work or is not appropriate, an indication of a part of the selected preliminary switchgear operation rule that is unclear, a rewording of a part of the selected preliminary switchgear operation rule, an indication of an alternative step or action to a step or action of the selected preliminary switchgear operation rule, an indication of an additional step or action to a step or action of the selected preliminary switchgear operation rule.

In an example, the generating the updated preliminary switchgear operation rule comprises utilizing the LLM to process the edit and/or feedback in textual form to generate the one or more of: adding one or more new action steps to the action step or action steps of the preliminary switchgear operation rule, changing an order of action steps of the preliminary switchgear operation rule, editing one or action steps of the preliminary switchgear operation rule, highlighting one or more action steps of the preliminary switchgear operation rule, adding one or more action steps to the preliminary switchgear operation rule.

Thus, more detailed or structured explicit edits and/or feedback is provided by the operator, technician or expert to enable a rule to be most appropriately updated in order that it is fit for purpose for use by the operator or indeed any other operator or technician when faced with the same issue or problem.

Furthermore, the method enables steps of a rule to be highlighted, to indicate steps that appear to be weak, or wrong, or inappropriate, thereby enabling a technician using the rule to take particular care when referring to this action step of the rule, and also enables an expert to thoroughly review the rule to further edit the rule to correct any error or discrepancy or to validate the rule as being correct.

In an example, the system is configured to provide the edit and/or feedback in textual form to the rule generator engine as an XML or JSON file.

In a third aspect, there is provided a computer program element for controlling a processor to carry out the method according to the second aspect.

In an example, there is provided a computer readable medium having stored the computer element of the third aspect.

The computer program elements can for example be a software program but can also be a FPGA, a PLD or any other appropriate digital means.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a first development of a rule generation system;
Fig. 2 shows a detailed example of a first development of a rule generation system;
Fig. 3 shows a first development of a rule generation system;
Fig. 4 shows a further development of a rule generation system;
Fig. 5 shows a detailed example of a further development of a rule generation system;
Fig. 6 shows a detailed example of a further development of a rule generation system; and
Fig. 7 shows a detailed example of a further development of a rule generation system.

### DETAILED DESCRIPTION OF EMBODIMENTS

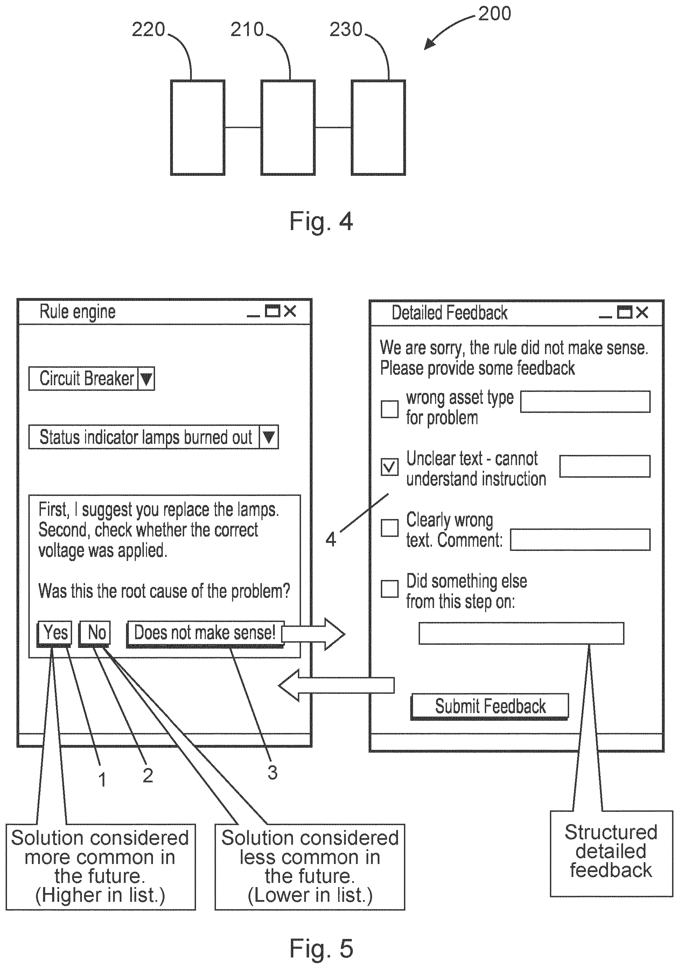

The rule generation system 200 described here is described with respect to figures 4-7.

However, the inventors in arriving at the present rule generation system developed a first rule generation system 100, that they realized could be further improved upon.

It is then useful to review the first rule generation system 100, and this leads into a better understanding of the improvements provided by the further developed rule generation system 200.

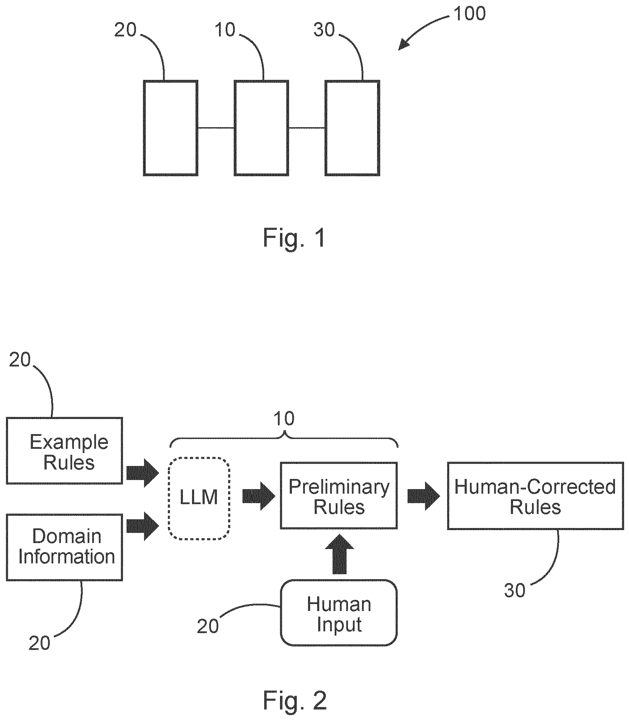

Fig. 1 shows an example first rule generation system 100 for a low, medium or high voltage switchgear, comprising:
- a deterministic rule generator 10;
- an input unit 20; and
- an output unit 30.

The input unit is configured to receive a request for a rule relating to operation of a switchgear. The input unit is configured to provide the request to the deterministic rule generator. The deterministic rule generator is configured to implement a large language model. The deterministic rule generator is configured to generate a switchgear operation rule, and the generation of the switchgear operation rule comprises processing of the request by the large language model. The output unit is configured to output the switchgear operation rule.

Thus, the inventors started from the realization that Large Language Models (LLMs) like ChatGPT are a quick way to get answers for questions on any kind of topic. However, the inventors also realized that LLMs are known to fabricate facts and are thus not fully reliable and act as a black box, so no "debugging" is possible. Rules engines, as used by service personnel for help and guidance in servicing switchgears, depend on a collection of facts presented as rules (e.g., using Ontologies). However, building the knowledge base for such deterministic rules engines is quite time intensive. Thus, the inventors developed a new technique to leverage the ease of use of LLMs with the precision of deterministic tools by using the LLMs to support the creation of the rules.

Fig. 2 shows a detailed example of the first rule generation system.

Today, LLMs can be used to write code snippets that can be used by human programmers to write their own software more quickly. The inventors combined domain information and example rules, and then use the LLM to create preliminary rules suggestions for certain situations related to the domain - servicing of a switchgear.

Thus, as shown in shown in Fig. 2 , a human expert will ask the LLM to provide the rules based on his or her idea about what is needed to be in the system. The human can look at the rules and fix them, create variants not covered, and even provide new rules that are still missing. The LLM can be used to generate preliminary rules. This LLM can be a pre-trained LLM, but does not need to be, trained on rule generation data set which is then fine-tuned on more prompt and corresponding generated rule pairs. The finetuned LLMs is provided with additional contextual information in the form of example rules and domain information in the terms of vector embeddings to generate the desired results.

Thus, Large Language Models (LLMs) like ChatGPT are a quick way to get answers for questions on any kind of topic, however LLMs are known to fabricate facts and are thus not fully reliable. Also, they are black boxes, so one cannot double check easily how they came to their conclusions.

The above described feedback mechanism, involving the generation of preliminary rules and feedback on those rules, addresses this negative aspect of LLMs.

Thus, a deterministic rules engine that serves as a support tool for the service personnel that can guide them, based on the state of the machine (e.g., Switchgears) on what actions need to be performed to maintain a machine, can be utilized with newly generated rule.

The deterministic rules engine can for example be a series of instructions on smartphone or something deployed on the machine to be serviced. Deterministic rules engines depend on a collection of facts presented as rules (e.g., using Ontologies). However, previously building the knowledge base was quite time intensive. Now, the rules used by the deterministic rules engine can be generated in a new way, as described above.

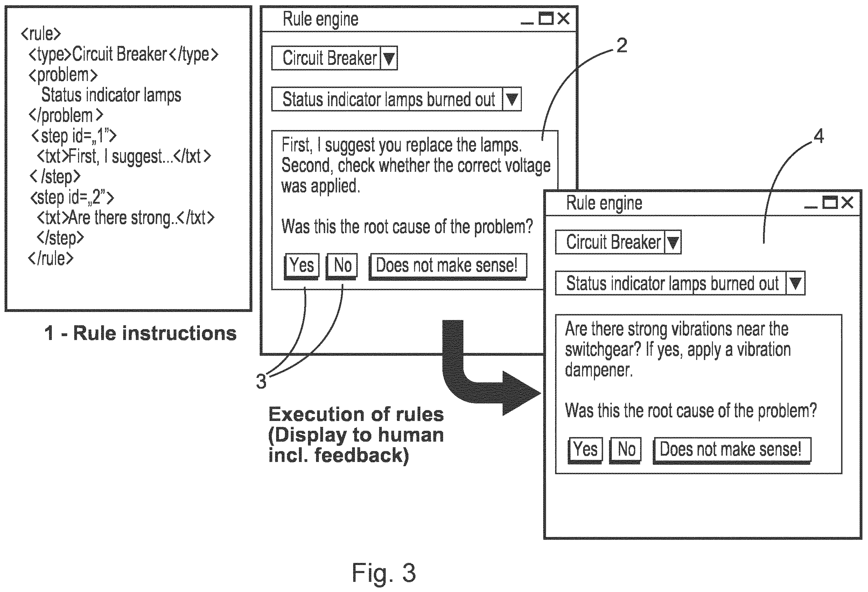

Thus, referring to the first development made by the inventors, Fig. 3 shows in effect a summary. There is a rules engine that executes a description of steps written in a custom textual description language (1 in Fig. 3). As a result, at each step, it shows the specified instructions to a service technician (2 in Fig. 3). After reading the instruction for the step and trying it out in real life, the technician can press buttons (3 in Fig. 3) to see more tips (next step, 4 in Fig. 3) or end the instructions. (More complex flows are possible, this is a very simple example of a list of suggested solutions).

Therefore, in the first development made by the inventors, the textual descriptions of the rules are generated by a large language model from prior service reports and improved/edited by a human before being uploaded into the engine.

However, the inventors realized that the rules may not be perfect and may need to be improved over time. The inventors realized that the basic solution of interviewing service technicians or writing emails is not very efficient.

The inventors realized that instead of organizational approaches to provide feedback, feedback could be collected implicitly and explicitly from the user with minimal effort. The development was then that this feedback can be fed to the same large language model that was originally used to suggest new rules (which were then finalized by a human editing the rules). So instead of a service report, the original rule and the feedback are used to write a new (or rather updated) rule.

Fig. 4 then shows an example of the further improved rule generation system 200 for a low, medium or high voltage switchgear, comprising:
- a rule generator engine 210;
- an input unit 220; and
- an output unit 230.

The input unit is configured to receive a query from an operator regarding an activity relating to a switchgear. The activity relating to the switchgear comprises one or more of: operation of the switchgear, maintenance of the switchgear, rectification of one or more problems with the switchgear.

The input unit is configured to provide the query to the rule generator engine.

The rule generator engine is configured to provide at least one preliminary switchgear operation rule. The provision of the at least one preliminary switchgear operation rule comprises utilization of the query. Each preliminary switchgear operation rule comprises a tuple of one instrument type, one issue, and an action step or series of action steps taken to mitigate the issue.

The output unit is configured to output the at least one preliminary switchgear operation rule.

The input unit is configured to receive feedback on and/or an edit to a selected preliminary switchgear operation rule of the at least one preliminary switchgear operation rule. The feedback on and/or the edit to the selected preliminary switchgear operation rule is provided by the operator or a second operator.

The rule generator engine is configured to generate an updated preliminary switchgear operation rule. The generation of the updated preliminary switchgear operation rule comprises utilization of the selected preliminary switchgear operation rule and the feedback on and/or the edit to the selected preliminary switchgear operation rule.

The output unit is configured to output and/or save at least one switchgear operation rule. The at least one switchgear operation rule comprises the updated preliminary switchgear operation rule.

In is to be noted that rule generator engine 210 can be a development of rule generator engine 10, input unit 220 can be equivalent to input unit 20 and output unit 230 can be equivalent to output unit 30.

The input unit 220 can be a single input interface or multiple different input interfaces that perform the functions as described.

The rule generator engine 210 can be one or more processors that perform the functions as described.

The output unit 230 can be a single output interface or multiple different output interfaces that perform the functions as described.

The operator can be a technician who is going to work on a switchgear or a person such as an expert who is validating or updating rules that are to be used by a technician who is going to work on a switchgear.

The second operator can be a technician who is going to work on a switchgear or a person such as an expert who is validating or updating rules that are to be used by a technician who is going to work on a switchgear.

Thus, rules used to aid an operator or technician work on a switchgear can be updated based on edits/feedback by the operator or technician themselves and/or could be updated based on edits/feedback by an expert in order that a rule used to work on the switchgear is most appropriated for that work and for subsequent use by different operators/technicians faced with the same problem or issue.

In this manner, human feedback is provided to fine tune the rules, thereby in effect validating rules that are finally provided more fit for purpose.

In an example, the generation of the updated preliminary switchgear operation rule comprises utilization of a large language model (LLM) to process the selected preliminary switchgear operation rule and the feedback on and/or the edit to the selected preliminary switchgear operation rule.

Thus, a new technique is provided that makes use of a Large Language Model (LLM) such as ChatGPT to determine updated or optimized switchgear operation rules that can then be used, to support service personnel to guide them when working on a switchgear.

In an example, the generation of the updated preliminary switchgear operation rule comprises one or more of: add one or more new action steps to the action step or action steps of the preliminary switchgear operation rule, change an order of action steps of the preliminary switchgear operation rule, edit one or more action steps of the preliminary switchgear operation rule, highlight one or more action steps of the preliminary switchgear operation rule, add one or more action steps to the preliminary switchgear operation rule.

That one or more action steps of the preliminary switchgear operation rule can be highlighted means that it can be indicate that more detail is required to be added to the one or more action steps.

In an example, the provision of the at least one preliminary switchgear operation rule comprises utilization of the query to select the at least one preliminary switchgear operation rule from a knowledge base, wherein the knowledge base comprises a plurality of switchgear operation rules.

In an example, the provision of the at least one preliminary switchgear operation rule comprises utilization of the query by a LLM to process a plurality of service reports from the knowledge base to generate the at least one preliminary switchgear operation rule, wherein each service report comprises natural language.

The LLM that generates the at least one preliminary switchgear operation rule can be the same LLM that generated the updated preliminary switchgear operation rule or can be a different LLM.

The knowledge base can be one or more databases, computational storage media, and can include storage media of the rule generation system itself and/or the rule generation system can interrogate storage media external to the rule generation system as part of the retrieval of the information.

Thus, a Large Language Model (LLM) such as ChatGPT is used to generate rules in the first instance and this LLM or a different LM is used to determine updated or optimized switchgear operation rules that can then be used, to support service personnel to guide them when working on a switchgear, wherein domain specific knowledge is utilized to augment the process of generating the rules.

The new development, where relevant information from a knowledge base is utilized in the generation/extraction of rules, mitigates problems that could be caused by a LLM lacking domain specific and/or product specific knowledge.

In an example, the rule generator engine is configured to utilize the LLM to identify entries from the natural language in the plurality of service reports- The identified entries comprise names and types of instruments, issues that need to be addressed for those instruments, and actions taken by service technicians to mitigate the issues. The rule generator engine is configured to utilize the query and the identified entries to form the at least one preliminary operation rule.

In an example, the plurality of service reports comprise natural language in a plurality of different languages, the plurality of different languages comprising two or more of English, German, French, Italian, Spanish, French, Portuguese, Japanese, Chinese.

In an example, the query comprises natural language.

In an example, the query comprises computational code.

In an example, the at least one preliminary switchgear operation rule comprises computational code and/or the at least one switchgear operation rule comprises computational code.

In an example, the at least one preliminary switchgear operation rule comprises natural language and/or the at least one switchgear operation rule comprises natural language.

In an example, the feedback on and/or the edit to the selected preliminary switchgear operation rule comprises computational code.

In an example, the feedback on and/or the edit to the selected preliminary switchgear operation rule comprises natural language.

In an example, the at least one preliminary switchgear operation rule comprises a plurality of preliminary switchgear operation rules. The rule generator engine is configured to determine a relevance score for each preliminary switchgear rule comprising utilization of the query. The output unit is configured to output the plurality of preliminary of switchgear operation rules in a list ordered based on the relevance score for each preliminary switchgear operation rule.

Thus, the operator or technician or expert is presented with a series of possible rules that are considered to be most suitable for the task at hand. In this way, the operator or technician or expert can identify the most suitable rule or indeed identify a rule that is no appropriate. This ensures that for a set task that needs to be done, operators can input queries in quite different ways, but the system based on the edits/feedback will be able to present the finalized most appropriate rules irrespective of how an operative has formulated the job they are to do in an input query.

In an example, the feedback on and/or the edit to the selected preliminary switchgear operation rule comprises an indication that the selected preliminary switchgear operation rule should be placed higher in the list and the rule generator engine is configured to update the relevance score for the selected preliminary switchgear rule to a higher relevance score.

In an example, the feedback on and/or the edit to the selected preliminary switchgear operation rule comprises an indication that the selected preliminary switchgear operation rule should be placed lower in the list and the rule generator engine is configured to update the relevance score for the selected preliminary switchgear rule to a lower relevance score.

In an example, the generation of the updated preliminary switchgear operation rule comprises assigning a relevance score for the updated preliminary switchgear operation rule based on the updated relevance score for the selected preliminary switchgear operation rule.

In an example, the at least one switchgear operation rule comprises a plurality of switchgear operation rules that comprise the updated preliminary switchgear operation rule and the plurality of preliminary switchgear operation rules other than the selected preliminary switchgear operation rule. The output unit is configured to output and/or save the plurality of switchgear operation rules in a list ordered based on the relevance score for each switchgear operation rule.

Thus, the operator or technician or expert could utilize a simple "yes" or "no" push button implicit form of feedback, pushing a yes button on a screen to indicate for example that a rule that is presented constitutes a solution that often represents a fix to the problem or issue or pushing a no button on a screen to indicate for example that a rule that is presented constitutes a less likely solution to fix to the problem.

In an example, the feedback on and/or the edit to the selected preliminary switchgear operation rule comprises an edit and/or feedback on one or more specific issues relating to the selected preliminary switchgear operation rule provided in textual form. The edit and/or feedback on one or more specific issues relating to the selected preliminary switchgear operation rule provided in textual form comprises one or more of: an indication of a part of the selected preliminary switchgear operation rule that might not work or is not appropriate, an indication of a part of the selected preliminary switchgear operation rule that is unclear, a rewording of a part of the selected preliminary switchgear operation rule, an indication of an alternative step or action to a step or action of the selected preliminary switchgear operation rule, an indication of an additional step or action to a step or action of the selected preliminary switchgear operation rule.

In an example, the generation of the updated preliminary switchgear operation rule comprises utilization of the LLM to process the edit and/or feedback in textual form to generate the one or more of: add one or more new action steps to the action step or action steps of the preliminary switchgear operation rule, change an order of action steps of the preliminary switchgear operation rule, edit one or more action steps of the preliminary switchgear operation rule, highlight one or more action steps of the preliminary switchgear operation rule, add one or more action steps to the preliminary switchgear operation rule.

Thus, more detailed or structured explicit edits and/or feedback is provided by the operator, technician or expert to enable a rule to be most appropriately updated in order that it is fit for purpose for use by the operator or indeed any other operator or technician when faced with the same issue or problem.

Furthermore, the system enables steps of a rule to be highlighted, to indicate steps that appear to be weak, or wrong, or inappropriate, thereby enabling a technician using the rule to take particular care when referring to this action step of the rule, and also enables an expert to thoroughly review the rule to further edit the rule to correct any error or discrepancy or to validate the rule as being correct.

In an example, the system is configured to provide the edit and/or feedback in textual form to the rule generator engine as an XML or JSON file.

An associated improved rule generation method for a low, medium or high voltage switchgear comprises:
- receiving, by an input unit, a query from an operator regarding an activity relating to a switchgear, wherein the activity comprises one or more of operation of the switchgear, maintenance of the switchgear, rectification of one or more problems with the switchgear;
- providing, by the input unit, the query to a rule generator engine;
- providing, by the rule generator engine, at least one preliminary switchgear operation rule, wherein the providing the at least one preliminary switchgear operation rule comprises utilizing the query, and wherein each preliminary switchgear operation rule comprises a tuple of one instrument type, one issue, and an action step or series of action steps taken to mitigate the issue;
- outputting, by an output unit, at least one preliminary switchgear operation rule;
- receiving, by the input unit, feedback on and/or an edit to a selected preliminary switchgear operation rule of the at least one preliminary switchgear operation rule, wherein the feedback on and/or the edit to the selected preliminary switchgear operation rule is provided by the operator or a second operator;
- generating, by the rule generator engine, an updated preliminary switchgear operation rule, wherein the generating the updated preliminary switchgear operation rule comprises utilizing the selected preliminary switchgear operation rule and the feedback on and/or the edit to the selected preliminary switchgear operation rule; and
- outputting and/or saving, by output unit, at least one switchgear operation rule, wherein the at least one switchgear operation rule comprises the updated preliminary switchgear operation rule.

The input unit can be a single input interface or multiple different input interfaces that perform the functions as described.

The rule generator engine can be one or more processors that perform the functions as described.

The output unit can be a single output interface or multiple different output interfaces that perform the functions as described.

The operator can be a technician who is going to work on a switchgear or a person such as an expert who is validating or updating rules that are to be used by a technician who is going to work on a switchgear.

The second operator can be a technician who is going to work on a switchgear or a person such as an expert who is validating or updating rules that are to be used by a technician who is going to work on a switchgear.

Thus, rules used to aid an operator or technician work on a switchgear can be updated based on edits/feedback by the operator or technician themselves and/or could be updated based on edits/feedback by an expert in order that a rule used to work on the switchgear is most appropriated for that work and for subsequent use by different operators/technicians faced with the same problem or issue.

In this manner, human feedback is provided to fine tune the rules, thereby in effect validating rules that are finally provided more fit for purpose.

In an example, the generating the updated preliminary switchgear operation rule comprises utilizing a large language model (LLM) to process the selected preliminary switchgear operation rule and the feedback on and/or the edit to the selected preliminary switchgear operation rule.

Thus, a new technique is provided that makes use of a Large Language Model (LLM) such as ChatGPT to determine updated or optimized switchgear operation rules that can then be used, to support service personnel to guide them when working on a switchgear.

In an example, the generating the updated preliminary switchgear operation rule comprises one or more of: adding one or more new action steps to the action step or action steps of the preliminary switchgear operation rule, changing an order of action steps of the preliminary switchgear operation rule, editing one or action steps of the preliminary switchgear operation rule, highlighting one or more action steps of the preliminary switchgear operation rule, adding one or more action steps to the preliminary switchgear operation rule.

That the method can highlight one or more action steps of the preliminary switchgear operation rule means that the method can indicate that more detail is required to be added to the one or more action steps.

In an example, the providing the at least one preliminary switchgear operation rule comprises utilizing the query to select the at least one preliminary switchgear operation rule from a knowledge base, wherein the knowledge base comprises a plurality of switchgear operation rules.

In an example, the providing the at least one preliminary switchgear operation rule comprises utilizing the query by a LLM to process a plurality of service reports from the knowledge base to generate the at least one preliminary switchgear operation rule, wherein each service report comprises natural language.

The LLM that generates the at least one preliminary switchgear operation rule can be the same LLM that generated the updated preliminary switchgear operation rule or can be a different LLM.

The knowledge base can be one or more databases, computational storage media, and can include storage media of the rule generation system itself and/or the rule generation system can interrogate storage media external to the rule generation system as part of the retrieval of the information.

Thus, a Large Language Model (LLM) such as ChatGPT is used to generate rules in the first instance and this LLM or a different LM is used to determine updated or optimized switchgear operation rules that can then be used, to support service personnel to guide them when working on a switchgear, wherein domain specific knowledge is utilized to augment the process of generating the rules.

The new development, where relevant information from a knowledge base is utilized in the generation/extraction of rules, mitigates problems that could be caused by a LLM lacking domain specific and/or product specific knowledge.

In an example, the method comprises utilizing, by the rule generator engine, the LLM to identify entries from the natural language in the plurality of service reports, wherein the identified entries comprise names and types of instruments, issues that need to be addressed for those instruments, and actions taken by service technicians to mitigate the issues; and utilizing, by the rule generator engine, the query and the identified entries to form the at least one preliminary operation rule.

In an example, the plurality of service reports comprise natural language in a plurality of different languages, the plurality of different languages comprising two or more of English, German, French, Italian, Spanish, French, Portuguese, Japanese, Chinese.

In an example, the query comprises natural language.

In an example, the query comprises computational code.

In an example, the at least one preliminary switchgear operation rule comprises computational code and/or the at least one switchgear operation rule comprises computational code.

In an example, the at least one preliminary switchgear operation rule comprises natural language and/or the at least one switchgear operation rule comprises natural language.

In an example, the feedback on and/or the edit to the selected preliminary switchgear operation rule comprises computational code.

In an example, the feedback on and/or the edit to the selected preliminary switchgear operation rule comprises natural language.

In an example, the at least one preliminary switchgear operation rule comprises a plurality of preliminary switchgear operation rules, and wherein the method comprises determining, by rule generator engine, a relevance score for each preliminary switchgear rule comprising utilizing the query, and outputting, by the output unit, the plurality of preliminary of switchgear operation rules in a list ordered based on the relevance score for each preliminary switchgear operation rule.

Thus, the operator or technician or expert is presented with a series of possible rules that are considered to be most suitable for the task at hand. In this way, the operator or technician or expert can identify the most suitable rule or indeed identify a rule that is no appropriate. This ensures that for a set task that needs to be done, operators can input queries in quite different ways, but the system based on the edits/feedback will be able to present the finalized most appropriate rules irrespective of how an operative has formulated the job they are to do in an input query.

In an example, the feedback on and/or the edit to the selected preliminary switchgear operation rule comprises an indication that the selected preliminary switchgear operation rule should be placed higher in the list or an indication that the selected preliminary switchgear operation rule should be placed lower in the list. The method can then comprise updating, by the rule generator engine, the relevance score for the selected preliminary switchgear rule to a higher relevance score or updating, by the rule generator engine, the relevance score for the selected preliminary switchgear rule to a lower relevance score. The generating the updated preliminary switchgear operation rule comprises assigning a relevance score for the updated preliminary switchgear operation rule based on the updated relevance score for the selected preliminary switchgear operation rule. The at least one switchgear operation rule comprises a plurality of switchgear operation rules that comprise the updated preliminary switchgear operation rule and the plurality of preliminary switchgear operation rules other than the selected preliminary switchgear operation rule. The method can then further comprise outputting and/or saving, by the output unit, the plurality of switchgear operation rules in a list ordered based on the relevance score for each switchgear operation rule.

Thus, the operator or technician or expert could utilize a simple "yes" or "no" push button implicit form of feedback, pushing a yes button on a screen to indicate for example that a rule that is presented constitutes a solution that often represents a fix to the problem or issue or pushing a no button on a screen to indicate for example that a rule that is presented constitutes a less likely solution to fix to the problem

In an example, the feedback on and/or the edit to the selected preliminary switchgear operation rule comprises an edit and/or feedback on one or more specific issues relating to the selected preliminary switchgear operation rule provided in textual form. The edit and/or feedback on one or more specific issues relating to the selected preliminary switchgear operation rule provided in textual form comprises one or more of: an indication of a part of the selected preliminary switchgear operation rule that might not work or is not appropriate, an indication of a part of the selected preliminary switchgear operation rule that is unclear, a rewording of a part of the selected preliminary switchgear operation rule, an indication of an alternative step or action to a step or action of the selected preliminary switchgear operation rule, an indication of an additional step or action to a step or action of the selected preliminary switchgear operation rule.

In an example, the generating the updated preliminary switchgear operation rule comprises utilizing the LLM to process the edit and/or feedback in textual form to generate the one or more of: adding one or more new action steps to the action step or action steps of the preliminary switchgear operation rule, changing an order of action steps of the preliminary switchgear operation rule, editing one or action steps of the preliminary switchgear operation rule, highlighting one or more action steps of the preliminary switchgear operation rule, adding one or more action steps to the preliminary switchgear operation rule.

Thus, more detailed or structured explicit edits and/or feedback is provided by the operator, technician or expert to enable a rule to be most appropriately updated in order that it is fit for purpose for use by the operator or indeed any other operator or technician when faced with the same issue or problem.

Furthermore, the method enables steps of a rule to be highlighted, to indicate steps that appear to be weak, or wrong, or inappropriate, thereby enabling a technician using the rule to take particular care when referring to this action step of the rule, and also enables an expert to thoroughly review the rule to further edit the rule to correct any error or discrepancy or to validate the rule as being correct.

In an example, the system is configured to provide the edit and/or feedback in textual form to the rule generator engine as an XML or JSON file.

The further improved rule generation system 200 is now described in further detail with respect to a very detailed embodiment described with respect to Figs. 5-7.

Fig. 5 then shows certain functionality of the further improved rule generation system 200.

Regarding user feedback, some of this feedback can be harvested in a manner that is termed implicit. It has already been explained that service technician uses the buttons to navigate between steps of the rule. In one embodiment (shown in the Fig. 5) there is a "yes" (1) button and a "no" (2) button. Clicking "yes" at a given step means that the current suggestion was the solution and the problem is fixed. "No" or similar means, the technician needs to see more possible causes.

For the **implicit feedback,** these buttons can be used. Solutions that get a "yes" often represent a common fix. Solutions that get a "no" are less likely to be common fixes. Ideally, the most likely solutions would be shown first. The count of successes/non-successes can be encoded in a text file like XML or JSON as feedback to the rule generator engine.

For the Explicit feedback (triggered by pressing a special button (3) in Fig. 5) in an embodiment this is based on a checkbox list of common issues (4 in Fig. 5) which can also lead to a text comment. This information can be put into a textual data structure (like an XML of JSON file). The fields in Fig. 5 are just examples for illustration. Other, common scenarios could be added as well as a free form field. In a very simple scenario, there could just be one text field.

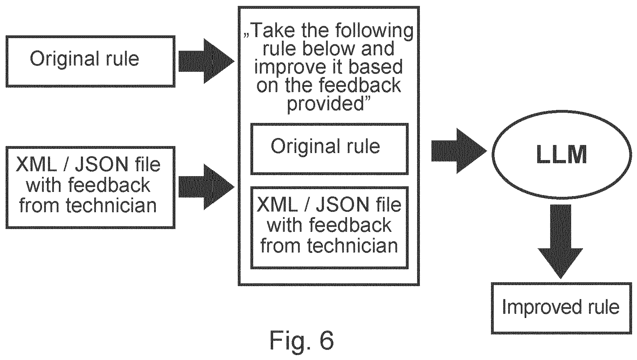

Fig. 6 then shows more details regarding the further improved rule generation system 200, that concentrates on what has been termed explicit feedback.

The explicit feedback, as discussed above, can be turned into a textual description. The new development acquires feedback in the exemplar following situations:
- A solution in terms of a rule presented to an operator might not work for a specific variant of the product, and feedback can be given that a variant rule is needed.
- A solution in terms of a rule presented to an operator, such as a service technician may contain unclear text, in that the service technician did not understand an instruction or step or steps of the rule). Therefore, the original source of the rule can be reviewed and the text for one or more steps of the original rule can be reworded.
- The technician describes what else he or she did after the original rule failed to support the actual problem at hand. Thus, the rule needs to be changed after a specific step.

Using this textual feedback, the feedback is used as input to a Large Language Model (LLM) as shown in Fig. 6. Combined with the original rule, the feedback can be used to:
- Create a new rule that uses a changed order of steps and changes parts of the rule that were ambiguous or wrong. It can for example replace a whole branch of the rules, or just replace one action step. (The LLM can be combined with deterministic code in some parts, for example to change the order of rules or to change text.)
- Point out weaknesses in the rule so that a human can update the rule with minimal effort. This variant has an advantage that a human expert can then update the rule, to reduce risk of error, but is not essential in that a rule can be updated automatically. For example, a revision tool could highlight the parts that are likely to be wrong, show comments with suggested changes, and display other commentary that can help write a new version. The human in the loop can ensure higher quality.

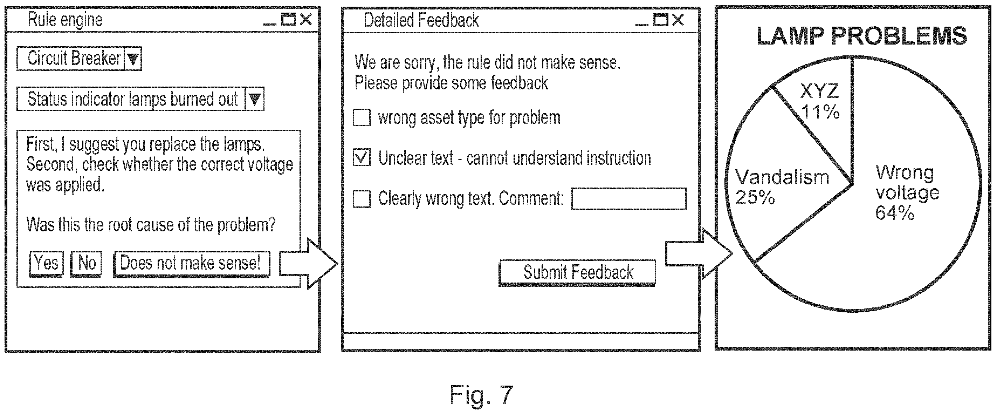

Fig. 7 then shows a more details regarding the further improved rule generation system 200, that concentrates on the feedback. Here an additional way to use this information is to provide feedback to the designers of the product that is being maintained. The feedback can be used to set up statistics and generate feedback text that can be sent to the designers.

Thus, overall the further improved rule generation system 200 enables rules to be improved with feedback from operators such as service technicians, without imposing too much overhead on the technicians.

In another exemplary embodiment, a computer program or computer program element is provided that is characterized by being configured to execute the method steps of the method according to one of the preceding embodiments, on an appropriate processor or system.

The computer program element might therefore be stored on a computer unit, which might also be part of an embodiment. This computing unit may be configured to perform or induce performing of the steps of the method described above. Moreover, it may be configured to operate the components of the above described system. The computing unit can be configured to operate automatically and/or to execute the orders of a user. A computer program may be loaded into a working memory of a data processor. The data processor may thus be equipped to carry out the method according to one of the preceding embodiments.

This exemplary embodiment of the invention covers both, a computer program that right from the beginning uses the invention and computer program that by means of an update turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, USB stick or the like, is presented wherein the computer readable medium has a computer program element stored on it which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

## Claims

1. A rule generation system (200) for a low, medium or high voltage switchgear, comprising:
- a rule generator engine (210);
- an input unit (220); and
- an output unit (230);
wherein the input unit is configured to receive a query from an operator regarding an activity relating to a switchgear, wherein the activity comprises one or more of: operation of the switchgear, maintenance of the switchgear, rectification of one or more problems with the switchgear;
wherein the input unit is configured to provide the query to the rule generator engine;
wherein the rule generator engine is configured to provide at least one preliminary switchgear operation rule, wherein the provision of the at least one preliminary switchgear operation rule comprises utilization of the query, and wherein each preliminary switchgear operation rule comprises a tuple of one instrument type, one issue, and an action step or series of action steps taken to mitigate the issue;
wherein the output unit is configured to output the at least one preliminary switchgear operation rule;
wherein the input unit is configured to receive feedback on and/or an edit to a selected preliminary switchgear operation rule of the at least one preliminary switchgear operation rule, wherein the feedback on and/or the edit to the selected preliminary switchgear operation rule is provided by the operator or a second operator;
wherein the rule generator engine is configured to generate an updated preliminary switchgear operation rule, wherein the generation of the updated preliminary switchgear operation rule comprises utilization of the selected preliminary switchgear operation rule and the feedback on and/or the edit to the selected preliminary switchgear operation rule; and
wherein the output unit is configured to output and/or save at least one switchgear operation rule, wherein the at least one switchgear operation rule comprises the updated preliminary switchgear operation rule.

2. System according to claim 1, wherein the generation of the updated preliminary switchgear operation rule comprises utilization of a large language model (LLM) to process the selected preliminary switchgear operation rule and the feedback on and/or the edit to the selected preliminary switchgear operation rule.

3. System according to claim 2, wherein the generation of the updated preliminary switchgear operation rule comprises one or more of: add one or more new action steps to the action step or action steps of the preliminary switchgear operation rule, change an order of action steps of the preliminary switchgear operation rule, edit one or more action steps of the preliminary switchgear operation rule, highlight one or more action steps of the preliminary switchgear operation rule, add one or more action steps to the preliminary switchgear operation rule.

4. System according to any of claims 1-3, wherein the provision of the at least one preliminary switchgear operation rule comprises utilization of the query by a LLM to process a plurality of service reports from the knowledge base to generate the at least one preliminary switchgear operation rule, wherein each service report comprises natural language.

5. System according to claim 4, wherein the rule generator engine is configured to utilize the LLM to identify entries from the natural language in the plurality of service reports, wherein the identified entries comprise names and types of instruments, issues that need to be addressed for those instruments, and actions taken by service technicians to mitigate the issues; and wherein the rule generator engine is configured to utilize the query and the identified entries to form the at least one preliminary operation rule.

6. System according to any of claims 4-5, wherein the plurality of service reports comprise natural language in a plurality of different languages, the plurality of different languages comprising two or more of English, German, French, Italian, Spanish, French, Portuguese, Japanese, Chinese.

7. System according to any of claims 1-6, wherein the at least one preliminary switchgear operation rule comprises a plurality of preliminary switchgear operation rules, and wherein the rule generator engine is configured to determine a relevance score for each preliminary switchgear rule comprising utilization of the query, and wherein the output unit is configured to output the plurality of preliminary of switchgear operation rules in a list ordered based on the relevance score for each preliminary switchgear operation rule.

8. System according to claim 7, wherein the feedback on and/or the edit to the selected preliminary switchgear operation rule comprises an indication that the selected preliminary switchgear operation rule should be placed higher in the list and the rule generator engine is configured to update the relevance score for the selected preliminary switchgear rule to a higher relevance score or an indication that the selected preliminary switchgear operation rule should be placed lower in the list and the rule generator engine is configured to update the relevance score for the selected preliminary switchgear rule to a lower relevance score, and wherein the generation of the updated preliminary switchgear operation rule comprises assigning a relevance score for the updated preliminary switchgear operation rule based on the updated relevance score for the selected preliminary switchgear operation rule, and wherein the at least one switchgear operation rule comprises a plurality of switchgear operation rules that comprise the updated preliminary switchgear operation rule and the plurality of preliminary switchgear operation rules other than the selected preliminary switchgear operation rule, and wherein the output unit is configured to output and/or save the plurality of switchgear operation rules in a list ordered based on the relevance score for each switchgear operation rule.

9. System according to claim 2 or any of claims 3-8 when dependent upon claim 2, wherein the feedback on and/or the edit to the selected preliminary switchgear operation rule comprises an edit and/or feedback on one or more specific issues relating to the selected preliminary switchgear operation rule provided in textual form, wherein the edit and/or feedback on one or more specific issues relating to the selected preliminary switchgear operation rule provided in textual form comprises one or more of: an indication of a part of the selected preliminary switchgear operation rule that might not work or is not appropriate, an indication of a part of the selected preliminary switchgear operation rule that is unclear, a rewording of a part of the selected preliminary switchgear operation rule, an indication of an alternative step or action to a step or action of the selected preliminary switchgear operation rule, an indication of an additional step or action to a step or action of the selected preliminary switchgear operation rule.

10. System according to claim 9, wherein the generation of the updated preliminary switchgear operation rule comprises utilization of the LLM to process the edit and/or feedback in textual form to generate the one or more of: add one or more new action steps to the action step or action steps of the preliminary switchgear operation rule, change an order of action steps of the preliminary switchgear operation rule, edit one or more action steps of the preliminary switchgear operation rule, highlight one or more action steps of the preliminary switchgear operation rule, add one or more action steps to the preliminary switchgear operation rule.

11. A rule generation method for a low, medium or high voltage switchgear, comprising:
- receiving, by an input unit, a query from an operator regarding an activity relating to a switchgear, wherein the activity comprises one or more of operation of the switchgear, maintenance of the switchgear, rectification of one or more problems with the switchgear;
- providing, by the input unit, the query to a rule generator engine;
- providing, by the rule generator engine, at least one preliminary switchgear operation rule, wherein the providing the at least one preliminary switchgear operation rule comprises utilizing the query, and wherein each preliminary switchgear operation rule comprises a tuple of one instrument type, one issue, and an action step or series of action steps taken to mitigate the issue;
- outputting, by an output unit, at least one preliminary switchgear operation rule;
- receiving, by the input unit, feedback on and/or an edit to a selected preliminary switchgear operation rule of the at least one preliminary switchgear operation rule, wherein the feedback on and/or the edit to the selected preliminary switchgear operation rule is provided by the operator or a second operator;
- generating, by the rule generator engine, an updated preliminary switchgear operation rule, wherein the generating the updated preliminary switchgear operation rule comprises utilizing the selected preliminary switchgear operation rule and the feedback on and/or the edit to the selected preliminary switchgear operation rule; and
- outputting and/or saving, by output unit, at least one switchgear operation rule, wherein the at least one switchgear operation rule comprises the updated preliminary switchgear operation rule.

12. Method according to claim 11, wherein the generating the updated preliminary switchgear operation rule comprises utilizing a large language model (LLM) to process the selected preliminary switchgear operation rule and the feedback on and/or the edit to the selected preliminary switchgear operation rule.

13. Method according to claim 12, wherein the feedback on and/or the edit to the selected preliminary switchgear operation rule comprises an edit and/or feedback on one or more specific issues relating to the selected preliminary switchgear operation rule provided in textual form, wherein the edit and/or feedback on one or more specific issues relating to the selected preliminary switchgear operation rule provided in textual form comprises one or more of: an indication of a part of the selected preliminary switchgear operation rule that might not work or is not appropriate, an indication of a part of the selected preliminary switchgear operation rule that is unclear, a rewording of a part of the selected preliminary switchgear operation rule, an indication of an alternative step or action to a step or action of the selected preliminary switchgear operation rule, an indication of an additional step or action to a step or action of the selected preliminary switchgear operation rule.

14. Method according to claim 13, wherein the generating the updated preliminary switchgear operation rule comprises utilizing the LLM to process the edit and/or feedback in textual form to generate the one or more of: adding one or more new action steps to the action step or action steps of the preliminary switchgear operation rule, changing an order of action steps of the preliminary switchgear operation rule, editing one or action steps of the preliminary switchgear operation rule, highlighting one or more action steps of the preliminary switchgear operation rule, adding one or more action steps to the preliminary switchgear operation rule.

15. A computer program element for controlling a processor to carry out the method of any of claims 11-14.
